# FASCICULE DE BREVET EUROPEEN

(11) **EP 4 073 169 B1**
(45) Date de publication et mention de la délivrance du brevet: **09.07.2025**
(21) Numéro de dépôt: 20841998.6
(22) Date de dépôt: 08.12.2020
(51) Int. Cl.: C08L 33/00, C08L 33/02, C08L 33/08, C08L 33/10, C08L 67/08, C09D 133/00, C09D 167/08, C09D 175/04, C08L 75/04

(54) **COMPOSITION DE JOINT ET/OU DE COLLAGE PRÊTE À L'EMPLOI**
GEBRAUCHSFERTIGE DICHTUNGS- UND/ODER KLEBSTOFF-ZUSAMMENSETZUNG
READY-TO-USE SEAL AND/OR ADHESIVE COMPOSITION

(30) Priorité: 11.12.2019 FR 1914145
(43) Date de publication de la demande: 19.10.2022
(73) Titulaire: Saint-Gobain Weber, 94370 Sucy-en-Brie (FR)
(72) Inventeur: ERNEST, Clément, 94300 VINCENNES (FR)
(74) Mandataire: Saint-Gobain Recherche
(86) Numéro de dépôt international: PCT/FR2020/052325
(87) Numéro de publication internationale: WO 2021/116585

(56) Documents cités:
- EP-A1- 2 110 410
- EP-A1- 3 263 663
- EP-A2- 1 980 595
- US-A- 3 854 267

## Description

La présente invention concerne une composition de joint et/ou de collage, prête à l'emploi, à base d'un composant particulaire et de liant organique comprenant à la fois une résine alkyde et un polymère filmogène différent d'une résine alkyde.

Les compositions de joint de carrelage prêtes à l'emploi sont des pâtes principalement à base de particules minérales, généralement du sable, d'un liant polymère et d'eau. Le liant polymère est généralement un polymère thermoplastique et/ou élastomère qui se présente sous forme de latex (émulsion aqueuse). Le durcissement d'une telle composition de joint de carrelage prête à l'emploi se fait essentiellement par évaporation du solvant aqueux et coalescence des particules de latex.

Les compositions de joint prêtes à l'emploi - comme les compositions de joint à base de liant hydraulique - sont étalées à l'aide d'une spatule ou raclette en caoutchouc sur l'ensemble de la surface carrelée, de manière à faire pénétrer la composition dans les espaces entre les carreaux et racler en même temps l'excès de matière. Cette opération laisse un film assez fin de composition de joint à la surface des carreaux. Ce film inesthétique doit ensuite être éliminé par essuyage. US 3 854 267 A décrit une composition de joint de carrelage comprenant de l'eau, des charges et un liant organique à base d'un polymère réticulable. Ce polymère peut être un polyacrylate (exemple XIV) ou une résine alkyd (exemple XLI).

Dans le cas des compositions de joint prêtes à l'emploi commercialisées par la Demanderesse ce film mince à la surface des carreaux s'est avéré difficile à éliminer après seulement quelques minutes de séchage. Cette difficulté d'essuyage est attribuée au fait que le liant organique polymère forme rapidement, par séchage et coalescence des particules de latex, un film polymère qui adhère fortement à la surface des carreaux et ne peut plus être éliminé par simple essuyage à l'aide d'une éponge humide. Ce même problème technique se pose dans une moindre mesure pour les compositions servant à coller les carrelages et les plaques pour façades, ou encore pour les mastics.

Ce type de composition de joint et/ou de collage prête à l'emploi nécessite donc l'essuyage presqu'immédiat du film résiduel ce qui exige de la part de l'applicateur une grande rapidité et dextérité.

Le but de la présente invention est de proposer une composition de joint et/ou de collage prête à l'emploi qui peut être essuyée plus facilement et plus longtemps après application, sans pour autant que les propriétés mécaniques des joints durcis soient dégradées.

Ce but a été atteint grâce à l'ajout d'une résine alkyde à la composition de de joint et/ou de collage connue.

La Demanderesse a en effet constaté avec surprise que l'ajout de quelques pourcents en poids de résine alkyde à une composition de joint de carrelage permettait d'allonger significativement le temps « ouvert » de la composition. L'allongement constaté est compris entre quelques minutes et plusieurs dizaines de minutes en fonction de la quantité de résine alkyde ajoutée. Le mince film résiduel de composition de joint à la surface des carreaux de carrelage peut ainsi être éliminé par simple essuyage au moyen d'une éponge humide jusqu'à environ 30 minutes après application. Cela facilite considérablement l'application car l'opérateur peut ainsi remplir les joints de zones carrelées beaucoup plus étendues sans se soucier de l'essuyage immédiat du film résiduel.

La résine alkyde, bien qu'il s'agisse d'un composant réactif, n'a pas besoin d'être ajoutée à la composition immédiatement avant emploi. Autrement dit, la composition de joint et/ou de collage de la présente invention reste avantageusement une composition monocomposant et ne devient pas une composition bi-composants, plus difficile d'emploi.

Le remplacement d'une partie significative du liant polymère d'une composition de joint et/ou de collage par une résine alkyde se traduit par ailleurs par une diminution du coût de production de la composition. En effet, les résines alkydes sont généralement moins coûteuses que les latex de polymères organiques tels que les latex acryliques, styrène-acryliques ou polyuréthannes couramment utilisés.

Le remplacement partiel du liant polymère habituel par une résine alkyde se traduit en outre avantageusement par une réduction de la quantité d'agent de coalescence, un composé organique volatile (COV) fréquemment présent dans les latex pour diminuer la température minimale de formation de film (MFFT, de l'anglais *minimum film formation temperature*)*.*

Enfin, la Demanderesse a constaté que l'ajout d'une résine alkyde à une composition de joint prête à l'emploi ne se traduisait pas par une dégradation des propriétés mécaniques du matériau de joint durci. Cela pourrait être dû au phénomène de siccativation de la composante huileuse de la résine alkyde.

La présente demande a par conséquent pour objet une composition de joint et/ou de collage pâteuse, prête-à l'emploi, comprenant
(a) un composant particulaire formé de charges et/ou de pigments,
(b) un liant organique comprenant
   - un premier polymère filmogène qui est une résine alkyde, et
   - un deuxième polymère filmogène, différent d'une résine alkyde, et (c) de l'eau,
caractérisée par le fait que la teneur en composant particulaire formé de charges et/ou de pigments est comprise entre 70 et 85 %, exprimé en poids sec rapporté au poids total de la composition.

Avantageusement, le liant organique est exempt de polymères organiques non-filmogènes et est alors constitué d'un premier polymère filmogène qui est une résine alkyde et d'un deuxième polymère filmogène différent d'une résine alkyde.

On entend par polymère filmogène un polymère dont la température minimale de formation de film (MFFT) est inférieure à 20 °C, de préférence inférieure à 15 °C et en particulier inférieure à 10 °C.

La composition de la présente invention a une consistance pâteuse. Elle ne s'écoule donc pas librement lorsqu'elle est appliquée sur la zone carrelée, mais présente une plasticité permettant de la faire entrer facilement dans les espaces entre les carreaux à l'aide d'une spatule ou d'une racle.

La composition de la présente invention est une composition monocomposant prête à l'emploi. Cela signifie qu'il n'est pas nécessaire d'y ajouter un autre composant, par exemple de l'eau ou un réactif, et qu'elle contient tous les ingrédients nécessaires à la formation de joints de carrelages durables et présentant une résistance mécanique compatible avec l'utilisation envisagée.

Ce qui précède n'exclut pas que, dans certains modes de réalisation, la composition réagit avec des composants de l'atmosphère après sa mise en place dans les joints. C'est le cas par exemple lorsque la résine alkyde contient des huiles siccatives comportant des insaturations éthyléniques qui réagissent lentement avec l'oxygène (O₂) de l'air.

La composition de la présente invention peut être une composition pour former les joints entre des carreaux de carrelage ou entre des plaques de façades. Elle peut également servir à coller les carreaux de carrelage ou les plaques de façades au support. La composition de la présente invention peut également être un mastic. Elle est de préférence une composition de joint de carrelage.

Le premier composant de la composition de la présente invention est un composant particulaire formé de charges et/ou de pigments.

Les charges sont de préférence des charges minérales. Elles ont pour principale fonction de donner de la consistance à la composition et d'en réduire les coûts.

Les charges minérales sont par exemple choisies dans le groupe formé par le sable, la dolomite broyée, la roche calcaire broyée, la barytine broyée et le marbre broyé. Les charges minérales ont de préférence des dimensions inférieures à 4 mm. Elles comprennent de préférence du sable.

On entend par « sable » des granulats minéraux alluvionnaires ayant des dimensions inférieures à 4 mm. On utilisera de préférence du sable de silice.

Les pigments englobent des pigments organiques et minéraux. Ils ont de préférence des dimensions similaires à celles des charges. Leur fonction est principalement de colorer le joint.

La teneur en composant particulaire formé de charges et/ou de pigments de la composition prête à l'emploi est comprise entre 70 et 85 %, exprimé en poids sec rapporté au poids total de la composition.

Le composant particulaire est avantageusement composé de particules ayant une taille (déterminée par tamisage) comprise entre 70 µm et 3,0 mm, de préférence entre 75 µm et 1,0 mm et en particulier entre 80 µm et 500 µm. La taille des particules du composant particulaire est idéalement comprise entre 90 µm et 300 µm.

Le deuxième composant de la composition de la présente invention est un liant organique formé d'au moins deux types de polymères, à savoir une résine alkyde filmogène et un autre polymère filmogène, différent d'une résine alkyde.

Ces deux types de polymères filmogènes sont de préférence introduits et présents dans la composition sous forme de dispersions aqueuses, également appelées latex.

Le composant (b) de la composition est donc avantageusement un mélange d'un latex de résine alkyde et d'un latex d'un autre polymère organique synthétique filmogène.

La quantité de liant organique, exprimé en poids sec de liant organique rapporté au poids total de la composition, est avantageusement comprise entre 4 et 15 %, de préférence entre 5 et 11 %, et en particulier entre 6 et 10 %.

Enfin, la teneur en eau de la composition est généralement comprise entre 5 et 20 % en poids rapporté au poids total de la composition, cette fraction aqueuse englobant l'eau des latex des premier et deuxième polymères filmogènes du liant organique.

Les résines alkydes sont des polyesters thermodurcissables modifiés par addition d'acides gras généralement sous forme d'huile (triglycérides). La teneur en huile, également appelée longueur d'huile d'une résine alkyde, peut aller d'environ 30 % à environ 70 %, les résines alkydes étant ainsi classées en résines courtes en huile, moyenne en huile et longue en huile.

La résine alkyde utilisée dans la présente invention a de préférence une longueur d'huile comprise entre 35 et 55 %.

Le durcissement des résines alkydes se fait par estérification, mais également par siccativation lorsque les huiles comportent des chaînes grasses insaturées. La siccativation est un phénomène connu qui comprend l'oxydation des insaturations éthyléniques avec l'oxygène de l'air et la formation de liens covalents entre chaînes grasses. Les huiles capables d'une telle réaction de polymérisation/réticulation sont appelées « huiles siccatives », ce terme englobant dans la présente demande les huiles siccatives à doubles liaisons conjuguées et les huiles semi-siccatives comportant des doubles liaisons non-conjuguées.

On utilisera avantageusement une résine alkyde à base d'huile de soja.

La résine alkyde peut en outre contenir un agent siccatif dont la fonction est d'accélérer la réaction de siccativation.

Les dispersions aqueuses de résines alkyde sont connues en tant que telles et leur préparation est décrite par exemple dans les demandes WO2001092378, WO2013/056162 ou EP 2 395 058. Elles sont disponibles dans le commerce par exemple sous la dénomination URADIL AZ-765 (DSM), Synaqua 2080 de chez Arkema, InoKem 1105 de chez Ecoat.

La résine alkyde (premier polymère filmogène du liant organique) est toujours utilisée en combinaison avec un deuxième polymère filmogène qui n'est pas une résine alkyde. Comme la résine alkyde, ce deuxième polymère filmogène est de préférence une dispersion aqueuse, autrement dit un latex.

La nature chimique de ce deuxième polymère filmogène n'est pas déterminante et ce deuxième polymère filmogène peut être choisi parmi une grande variété de polymères organiques filmogènes.

On peut citer à titre d'exemples de polymères filmogènes différents des résines alkydes ceux choisis dans le groupe formé par les polymères acryliques, les polymères styrène-acryliques et les polyuréthannes.

On utilisera de préférence un polymère acrylique, en particulier un latex acrylique.

Pour avoir un effet notable sur le temps ouvert de la composition de joint de carrelage de la présente invention, la résine alkyde doit être présente en une concentration au moins égale à 1 % en poids, de préférence au moins égale à 2 % en poids et en particulier au moins égale à 3 % en poids, exprimé en poids sec de résine rapporté au poids total de la composition de joint de carrelage. Sa concentration ne dépasse généralement pas 10 % en poids, et est de préférence inférieure à 9 % en poids, en particulier inférieure à 8 % en poids sec rapporté au poids total de la composition prête à l'emploi.

Le rapport en poids de la résine alkyde au deuxième polymère filmogène est avantageusement compris entre 20/80 et 80/20, de préférence entre 30/70 et 70/30, plus préférentiellement entre 40/60 et 60/40, exprimé en matières sèches de chacun des composants.

Les compositions de la présente invention peuvent en outre contenir un ou plusieurs additifs choisis notamment parmi les agents de coalescence, les agents dispersants, les agents épaississants, les agents colorants, et les agents conservateurs (biocides).

Ces additifs ne représentent de préférence pas plus de 4 % en poids de la composition de joint de carrelage, en particulier au plus 3 % en poids.

### Exemple

On prépare deux compositions A et B de joint de carrelage prêtes à l'emploi à partir des ingrédients du tableau 1

**[Tableau 1]**

| | | Composition A comparative | Composition B selon l'invention |
|---|---|---|---|
| | Ingrédient | % en poids | % en poids |
| Composant (a) | Sable de silice | 81 % | 81 % |
| Composant (b) | Latex de résine alkyde⁽¹⁾ | - | 7,39 |
| Composant (b) | Latex de polymère acrylique⁽²⁾ | 13,8 | 7,38 |
| Composant (c) | Eau | 3 | 3 |
| Additifs | Arbocel P4000⁽³⁾ | 0,22 | 0,22 |
| | Dowanol DPnB⁽⁴⁾ | 0,8 | - |
| | Dowanol DPM⁽⁵⁾ | 0,17 | - |
| | Byk 023⁽⁶⁾ | 0,17 | 0,17 |
| | Polyphase 728S⁽⁷⁾ | 0,43 | 0,43 |
| | Mergal 731⁽⁸⁾ | 0,14 | 0,14 |
| | Rheolate FX 1010⁽⁹⁾ | 0,13 | 0,13 |
| | Rheotan LA⁽¹⁰⁾ | 0,09 | 0,09 |
| | AMP 90⁽¹¹⁾ | 0,05 | 0,05 |

| | | | |
|---|---|---|---|
| (1) URADIL AZ-765 de DSM émulsion à 53 % d'extrait sec (2) PLIOTEC PA05 de Omnova Solutions, émulsion acrylique à 48 % d'extrait sec (3) Cellulose microcristalline insoluble dans l'eau (4) éther butylique de dipropylèneglycol (agent de coalescence) (5) éther méthylique de dipropylèneglycol (agent de coalescence) (6) émulsion aqueuse de silicone anti-mousse (7) antifongique/antialgues (8) conservateur (bactéries, champignons et levures) (9) polyéther-uréthane non-ionique, épaississant par association (10) agent dispersant (polyélectrolyte) (11) 2-amino-2-methyl-1-propanol avec 10 % d'eau | | | |

Les deux compositions A et B sont utilisées pour remplir les joints d'un carré formé de seize carreaux de carrelage à l'aide d'une racle en caoutchouc.

Au bout de cinq minutes, on essuie un premier quart du carrée à l'aide d'une éponge humide. Puis un deuxième quart après 10 minutes, un troisième quart après 20 minutes et le dernier quart après une période totale de séchage de 30 minutes.

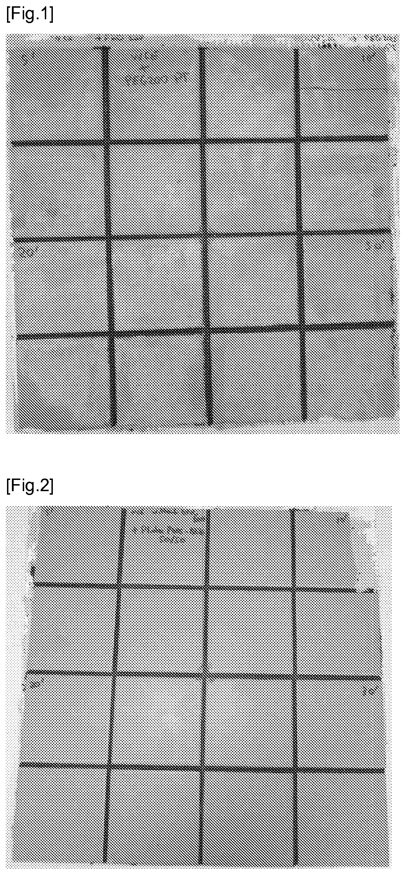

La Figure 1 montre le résultat obtenu avec la composition A comparative. On constate qu'après seulement cinq minutes de séchage (quart supérieur gauche) le mince film blanchâtre de composition de joint formé à la surface des carreaux de carrelage n'est pas éliminé par simple essuyage au moyen d'une éponge humide.

Par contre, comme le montre la Figure 2 obtenue avec la composition B selon l'invention, même après une durée totale de séchage de 30 minutes (quart inférieur droit), la surface des carreaux de carrelage nettoyés avec une éponge humide est parfaitement nette.

La présence d'environ 3 - 4 % en poids sec de résine alkyde retarde de manière spectaculaire le séchage et la coalescence des latex et prolonge avantageusement le temps ouvert de la composition de joint prête à l'emploi.

## Revendications

1. Composition de joint et/ou de collage pâteuse, prête-à l'emploi, comprenant
(a) un composant particulaire formé de charges et/ou de pigments,
(b) un liant organique comprenant
- un premier polymère filmogène qui est une résine alkyde, et
- un deuxième polymère filmogène, différent d'une résine alkyde,
(c) de l'eau,
**caractérisée par le fait que** la teneur en composant particulaire formé de charges et/ou de pigments est comprise entre 70 et 85 %, exprimé en poids sec rapporté au poids total de la composition.

2. Composition selon la revendication 1, dans laquelle les premier et deuxième polymères filmogènes sont présents sous forme de dispersions aqueuses.

3. Composition selon l'une des revendications précédentes, dans laquelle les charges sont des charges minérales choisies de préférence dans le groupe formé par le sable, la dolomite broyée, la roche calcaire broyée, la barytine broyée et le marbre broyé.

4. Composition selon l'une des revendications précédentes, dans laquelle la quantité de liant organique est comprise entre 4 et 15 %, exprimé en poids sec de liant organique rapporté au poids total de la composition.

5. Composition selon l'une des revendications précédentes, dans laquelle la teneur en eau est comprise entre 5 et 20 % en poids rapporté au poids total de la composition.

6. Composition selon l'une quelconque des revendications précédentes, dans laquelle la résine alkyde a une longueur d'huile comprise entre 35 et 55 %.

7. Composition selon l'une quelconque des revendications précédentes, dans laquelle l'huile de la résine alkyde est une huile siccative.

8. Composition selon la revendication 7, **caractérisée par le fait que** l'huile de la résine alkyde est l'huile de soja.

9. Composition selon l'une quelconque des revendications précédentes, dans laquelle la résine alkyde est présente en une concentration au moins égale à 1 % en poids, de préférence au moins égale à 2 % en poids et en particulier au moins égale à 3 % en poids, exprimé en poids sec de résine rapporté au poids total de la composition de joint de carrelage, la concentration de la résine alkyde ne dépassant pas 10 % en poids sec rapporté au poids total de la composition prête à l'emploi.

10. Composition selon l'une des revendications précédentes, dans laquelle le deuxième polymère filmogène, différent d'une résine alkyde, est choisi dans le groupe formé par les polymères acryliques, les polymères styrène-acryliques et les polyuréthannes.

11. Composition selon l'une des revendications précédentes, dans laquelle le deuxième polymère filmogène, différent d'une résine alkyde, est un polymère acrylique.

12. Composition selon l'une des revendications précédentes, dans laquelle le rapport en poids de la résine alkyde au deuxième polymère filmogène est compris entre 20/80 et 80/20, de préférence entre 30/70 et 70/30, plus préférentiellement entre 40/60 et 60/40, exprimé en matières sèches de chacun des composants.

13. Composition selon l'une quelconque des revendications précédentes, **caractérisée en ce qu'**elle contient en outre un ou plusieurs additifs choisis notamment parmi les agents de coalescence, les agents dispersants, les agents épaississants, les agents colorants, les agents conservateurs (biocides).

14. Composition selon l'une quelconque des revendications précédentes, **caractérisée par le fait qu'**il s'agit d'une composition de joint de carrelage.

## Patentansprüche

1. Gebrauchsfertige, pastöse Abdichtungs- und/oder Klebezusammensetzung, umfassend
(a) eine partikuläre Komponente, die aus Füllstoffen und/oder Pigmenten ausgebildet ist,
(b) ein organisches Bindemittel, umfassend
- ein erstes filmbildendes Polymer, das ein Alkydharz ist, und
- ein zweites filmbildendes Polymer, das sich von einem Alkydharz unterscheidet,
(c) Wasser,
**dadurch gekennzeichnet, dass** der Gehalt an partikulärer Komponente aus Füllstoffen und/oder Pigmenten zwischen 70 und 85 %, ausgedrückt in Trockengewicht, bezogen auf das Gesamtgewicht der Zusammensetzung, beträgt.

2. Zusammensetzung nach Anspruch 1, wobei das erste und das zweite filmbildende Polymer als wässrige Dispersionen vorliegen.

3. Zusammensetzung nach einem der vorstehenden Ansprüche, wobei die Füllstoffe mineralische Füllstoffe sind, die vorzugsweise aus der Gruppe ausgewählt sind, die aus Sand, zerkleinertem Dolomit, zerkleinertem Kalkstein, zerkleinertem Baryt und zerkleinertem Marmor ausgebildet ist.

4. Zusammensetzung nach einem der vorstehenden Ansprüche, wobei die Menge des organischen Bindemittels zwischen 4 und 15 %, ausgedrückt als Trockengewicht des organischen Bindemittels, bezogen auf das Gesamtgewicht der Zusammensetzung, beträgt.

5. Zusammensetzung nach einem der vorstehenden Ansprüche, wobei der Wassergehalt zwischen 5 und 20 Gew.-%, bezogen auf das Gesamtgewicht der Zusammensetzung, beträgt.

6. Zusammensetzung nach einem der vorstehenden Ansprüche, wobei das Alkydharz einen Ölgehalt zwischen 35 und 55 % aufweist.

7. Zusammensetzung nach einem der vorstehenden Ansprüche, wobei das Öl des Alkydharzes ein trocknendes Öl ist.

8. Zusammensetzung nach Anspruch 7, **dadurch gekennzeichnet, dass** das Öl des Alkydharzes Sojaöl ist.

9. Zusammensetzung nach einem der vorstehenden Ansprüche, wobei das Alkydharz in einer Konzentration von mindestens gleich 1 Gew.-%, vorzugsweise mindestens gleich 2 Gew.-% und insbesondere mindestens gleich 3 Gew.-%, ausgedrückt als Trockengewicht des Harzes bezogen auf das Gesamtgewicht der Abdichtungszusammensetzung für Fliesen, vorliegt, wobei die Konzentration des Alkydharzes 10 Gew.-% Trockengewicht, bezogen auf das Gesamtgewicht der gebrauchsfertigen Zusammensetzung, nicht übersteigt.

10. Zusammensetzung nach einem der vorstehenden Ansprüche, wobei das zweite filmbildende Polymer, das sich von einem Alkydharz unterscheidet, aus der Gruppe ausgewählt ist, die aus Acrylpolymeren, Styrol-Acrylpolymeren und Polyurethanen besteht.

11. Zusammensetzung nach einem der vorstehenden Ansprüche, wobei das zweite filmbildende Polymer, das sich von einem Alkydharz unterscheidet, ein Acrylpolymer ist.

12. Zusammensetzung nach einem der vorstehenden Ansprüche, wobei das Gewichtsverhältnis des Alkydharzes zu dem zweiten filmbildenden Polymer zwischen 20/80 und 80/20, vorzugsweise zwischen 30/70 und 70/30, mehr bevorzugt zwischen 40/60 und 60/40, ausgedrückt als Trockenmasse jeder der Komponenten, beträgt.

13. Zusammensetzung nach einem der vorstehenden Ansprüche, **dadurch gekennzeichnet, dass** es ferner ein oder mehrere Additive enthält, die insbesondere aus Koaleszenzmitteln, Dispergiermitteln, Verdickungsmitteln, Farbstoffen, Konservierungsmitteln (Bioziden) ausgewählt sind.

14. Zusammensetzung nach einem der vorstehenden Ansprüche, **dadurch gekennzeichnet, dass** es sich um eine Abdichtungszusammensetzung für Fliesen handelt.

## Claims

1. A ready-to-use pasty grout and/or adhesive composition comprising
(a) a particulate component made of fillers and/or pigments,
(b) an organic binder comprising
- a first film-forming polymer that is an alkyd resin, and
- a second film-forming polymer that is different from an alkyd resin,
(c) water,
wherein the content of the particulate component made of fillers and/or pigments is comprised between 70 and 85%, expressed in dry weight relative to the total weight of the composition.

2. The composition according to claim 1, wherein the first and second film-forming polymers are present in the form of aqueous dispersions.

3. The composition according to any one of the previous claims, wherein the fillers are mineral fillers selected preferably from the group consisting of sand, ground dolomite, ground limestone, ground baryte and ground marble.

4. The composition according to any one of the previous claims, wherein the quantity of organic binder is comprised between 4 and 15%, expressed in dry weight of organic binder relative to the total weight of the composition.

5. The composition according to any one of the preceding claims, wherein the water content is comprised between 5 and 20 wt% relative to the total weight of the composition.

6. The composition according to any one of the previous claims, wherein the alkyd resin has an oil length comprised between 35 and 55%.

7. The composition according to any one of the previous claims, wherein the oil in the alkyd resin is a siccative oil.

8. The composition according to claim 7, **characterized by** the fact that the oil of the alkyd resin is soy oil.

9. The composition according to any one of the previous claims, wherein the alkyd resin is present in a concentration at least equal to 1% by weight, preferably at least equal to 2% by weight and in particular at least equal to 3% by weight, expressed in dry weight of resin relative to the total weight of the tiling grout composition, where the concentration of the alkyd resin does not exceed 10% by weight relative to the total weight of the ready-to-use composition.

10. The composition according to any one of the previous claims, wherein the second film-forming polymer, that is different from an alkyd resin, is selected from the group consisting of acrylic polymers, styrene-acrylic polymers and polyurethanes.

11. The composition according to any one of the previous claims, wherein the second film-forming polymer, that is different from an alkyd resin, is an acrylic polymer.

12. The composition according to any one of the previous claims, wherein the ratio by weight of alkyd resin to the second film-forming polymer is comprised between 20/80 and 80/20, preferably between 30/70 and 70/30, more preferably between 40/60 and 60/40, expressed in dry matter for each of the components.

13. The composition according to any one of the previous claims, **characterized in that** it further contains one or more additives selected in particular from coalescing agents, dispersing agents, thickeners, colorants and preservatives (biocides).

14. The composition according to any one of the previous claims, **characterized by** the fact that it is a tile grout composition.
